# EUROPÄISCHE PATENTSCHRIFT

(11) **EP 2 562 377 B1**
(45) Veröffentlichungstag und Bekanntmachung des Hinweises auf die Patenterteilung: **03.03.2021**
(21) Anmeldenummer: 12002722.2
(22) Anmeldetag: 19.04.2012
(51) Int. Cl.: F01N 3/20, G01F 23/30

(54) **BETRIEBSVERFAHREN FÜR EIN FAHRZEUG**
OPERATING METHOD FOR A VEHICLE
PROCÉDÉ DE FONCTIONNEMENT POUR VÉHICULE

(30) Priorität: 26.08.2011 DE 102011111555
(43) Veröffentlichungstag der Anmeldung: 27.02.2013
(73) Patentinhaber: MAN Truck & Bus SE, 80995 München (DE)
(72) Erfinder: BRUNO, Francesco, 85664 Hohenlinden (DE); FRANKE, Olaf, 80807 München (DE)
(74) Vertreter: v. Bezold & Partner Patentanwälte - PartG mbB

(56) Entgegenhaltungen:
- WO-A1-2010/077188
- DE-A1- 2 849 066
- DE-A1- 3 540 806
- GB-A- 2 492 351

## Beschreibung

Die Erfindung betrifft ein Betriebsverfahren für ein Fahrzeug, insbesondere ein Nutzfahrzeug, wie z.B. einen Lastkraftwagen, einen Omnibus oder ein anderes Kraftfahrzeug. Das Betriebsverfahren dient vorzugsweise zur Ermittlung realitätsnaher Füllwerte einer Flüssigkeit in einem Behälter des Fahrzeugs.

Die WO 2010/077188 A1 offenbart eine Harnstoff-Füllstandsmesseinrichtung, insbesondere zur Verwendung in einem Harnstofftank eines Fahrzeugs, mit einemSensorkörper mit einer oder mehreren Erfassungseinrichtungen und einer Füllstandsanzeige zum Anzeigen eines Harnstofffüllstands in dem Harnstofftank durch Aktivieren einer oder mehrerer der Erfassungseinrichtungen.

Die DE 28 49 066 A1 offenbart eine Einrichtung mit Tiefpassfilter zur Anzeige des Füllstandes in einem Fahrzeugtank, insbesondere eines Kraftfahrzeugs, mit mindestens einem elektrischen Messwertgeber, mit Mitteln zur Unterdrückung von störenden, durch die Fahrzeugbewegung hervorgerufenen Schwankungen des Messwerts sowie mit einem Anzeigegerät.

Die DE 35 40 806 A1 betrifft ebenfalls ein Verfahren zur Füllstandsmessung in wechselnden Beschleunigungen unterworfenen, Flüssigkeit enthaltenen Behältern.

Im Rahmen der Abgasnorm EURO VI soll die Anzahl an Stickoxiden im Abgas von Fahrzeugen reduziert werden. Um diese Reduktion zu erreichen, ist es bekannt, ein Harnstoff-Wasser-Gemisch in den Abgastrakt der Fahrzeuge zu spritzen.

Das Harnstoff-Wasser-Gemisch wird, ähnlich wie andere Betriebsstoffe, in einem separaten Fahrzeugtank gespeichert. Ein Steuergerät errechnet die für die angestrebte Reduktion erforderliche Harnstoff-Wasser-Gemisch-Menge. Die errechnete Harnstoff-Wasser-Gemisch-Menge wird z.B. von einer Pumpe aus dem separaten Fahrzeugtank in den Abgastrakt gefördert. Falls kein oder zu wenig Harnstoff-Wasser-Gemisch in den Abgastrakt gespritzt wird, werden auch keine oder zu wenig Stickoxide abgebaut.

Es ist angestrebt, dass Fahrzeugnutzer das Harnstoff-Wasser-Gemisch tanken, und das Harnstoff-Wasser-Gemisch in ausreichender Menge verwendet wird, z.B. um die Abgasnorm EURO VI einzuhalten.

Eine Aufgabe der Erfindung ist es, einen, vorzugsweise mehrere realitätsnahe Füllwerte (z.B. Volumenmenge, Füllstand, etc.) einer Flüssigkeit in einem Behälter eines Fahrzeugs zu ermitteln, woraus z.B. eine realitätsnahe Flüssigkeitsabnahme herleitbar ist, die vorzugsweise mit einer Referenzabnahme, die z.B. erforderlich ist, um eine bestimmte Reduktion von Schadstoffen im Abgas des Fahrzeugs zu erzielen, plausibilisiert (z.B. verglichen) werden kann.

Diese und andere Aufgaben können mit den Merkmalen des unabhängigen Anspruchs gelöst werden.

Erfindungsgemäß wird ein Betriebsverfahren für ein Fahrzeug, vorzugsweise ein Nutzfahrzeug, wie z.B. ein Lastkraftwagen, ein Omnibus, etc. oder ein anderes Kraftfahrzeug, vorgesehen, insbesondere zur Ermittlung realitätsnaher Füllwerte (z.B. Volumenmenge, Füllstand, etc.) einer Flüssigkeit in einem Behälter des Fahrzeugs. Die Flüssigkeit ist vorzugsweise ein Harnstoff-Wasser-Gemisch, kann im Rahmen der Erfindung aber auch jedwede andere Flüssigkeit sein.

Das Betriebsverfahren sieht zunächst zweckmäßig vor, einen Füllstand einer Flüssigkeit in einem Behälter des Fahrzeugs mittels eines Messmittels, z.B. eines Schwimmers, zu messen.

Vorzugsweise wird ein gemessener Füllstand einer nächstliegenden Füllstandsschwelle (z.B. Schaltschwelle) aus einer Vielzahl zweckmäßig bekannter Füllstandsschwellen zugeordnet. Jede Füllstandsschwelle kann z.B. einen definierten Füllwert (z.B. Volumenmenge, Füllstand, etc.) repräsentieren.

Erfindungsgemäß wird eine Füllstandsschwelle aus der Vielzahl von Füllstandsschwellen mittels des Messmittels aktiviert.

Die Frequention einer Aktivierung einer Füllstandsschwelle und vorzugsweise die Frequention einer Zuordnung eines gemessenen Füllstands zu einer nächstliegenden Füllstandsschwelle wird bestimmt, z.B. gezählt. Im Rahmen der Erfindung umfasst Frequention insbesondere die Häufigkeit und/oder die Dauer einer Aktivierung einer Füllstandsschwelle und alternativ oder ergänzend insbesondere die Häufigkeit und/oder die Dauer einer Zuordnung eines gemessenen Füllstands zu einer nächstliegenden Füllstandsschwelle.

Insbesondere wird diejenige Füllstandsschwelle ermittelt, die relativ zu einem zweckmäßig definierten Zeitraum eine maximale Frequention aufweist und somit insbesondere einen realitätsnahen Füllwert repräsentiert, vorzugsweise für die Zeit, während die nächste Ermittlung durchgeführt wird. Die Ermittlung kann z.B. während oder nach dem, insbesondere unmittelbar im Anschluss an den genannten Zeitraum erfolgen.

Die Füllstandsschwellen sind vorzugsweise voneinander beabstandet und/oder als diskrete Füllstandsschwellen ausgeführt.

Der realitätsnahe Füllwert ist vorzugsweise ein diskreter Füllwert.

Eine wesentliche Voraussetzung, um festzustellen, ob ausreichend Flüssigkeit aus dem Flüssigkeitsbehälter entnommen wird, ist die Kenntnis über einen realitätsnahen Füllwert (z.B. Volumenmenge, Füllstand, etc.) der Flüssigkeit in dem Fahrzeugbehälter.

Mittels eines realitätsnahen Füllwerts kann insbesondere eine realitätsnahe Flüssigkeitsabnahme hergeleitet werden. Es versteht sich, dass die Flüssigkeitsabnahme insbesondere einem Flüssigkeitsverbrauch entspricht.

Im Rahmen der Erfindung werden vorzugsweise zumindest zwei realitätsnahe Füllwerte ermittelt und z.B. genutzt, um eine realitätsnahe Flüssigkeitsabnahme zu errechnen. Insbesondere kann die Differenz zwischen zwei realitätsnahen Füllwerten errechnet werden, die einer realitätsnahen Flüssigkeitsabnahme entspricht. Die Flüssigkeitsabnahme kann somit insbesondere der Flüssigkeitsmenge entsprechen, die zwischen zwei Füllstandsschwellen oder zwei Füllwerten liegt.

Die realitätsnahe Flüssigkeitsabnahme (Flüssigkeitsverbrauch) wird vorzugsweise mit einer Referenzabnahme (Referenzverbrauch) plausibilisiert, insbesondere verglichen. Die Referenzabnahme ist z.B. so definiert, dass eine bestimmte Reduktion von Schadstoffen im Abgas des Fahrzeugs erzielt wird.

Der realitätsnahe Füllwert kann insbesondere für eine Kontrolle oder Prüfung genutzt werden, ob ein Referenzwert (z.B. eine Referenzmenge) auch tatsächlich aus dem Flüssigkeitsbehälter des Fahrzeugs entnommen wird. Der Referenzwert ist z.B. so definiert, dass eine bestimmte Reduktion von Schadstoffen im Abgas des Fahrzeugs erzielt wird.

Durch die hohe Dynamik einer Flüssigkeit in einem Behälter eines Fahrzeugs (z.B. durch Beschleunigung, Abbremsen, Kurvenfahrt, Schräglage, etc.) ist es unvorteilhaft, direkt gemessene Füllstände unmittelbar z.B. zur Flüssigkeitsverbrauchsberechnung heranzuziehen, weil das zu ungenauen Ergebnissen führt. Dieser Nachteil kann durch das erfindungsgemäße Betriebsverfahren vorteilhaft vermieden werden.

Außerdem bietet das erfindungsgemäße Betriebsverfahren den Vorteil, dass die ermittelten realitätsnahen Füllwerte von Störgrößen, wie etwa Messrauschen oder anderen z.B. durch Messtechnik bedingte Fehler im Wesentlichen bereinigt sind, und/oder von Fehlmessungen, die insbesondere aufgrund von Schwappen der Flüssigkeit in Abhängigkeit der Fahrsituation entstehen.

Es ist möglich, dass der Zeitraum ein dynamisch dimensionierter Zeitraum ist. Somit ist der Zeitraum vorzugsweise ein längenmäßig veränderbarer Zeitraum.

Der Zeitraum kann z.B. in Abhängigkeit von einem Referenzwert dimensioniert werden. Der Zeitraum entspricht insbesondere dem Zeitraum, in dem eine vorgegebene Flüssigkeitsmenge (z.B. Harnstoff-Wasser-Lösung) verbraucht worden ist. Dabei wird für die Verbrauchsermittlung zweckmäßig der Referenzwert herangezogen, der wie bereits erwähnt insbesondere so definiert ist, dass eine bestimmte Reduktion von Schadstoffen im Abgas des Fahrzeugs erzielt wird.

Die Bestimmung und/oder die Ermittlung kann zweckmäßig ausgeführt werden, nachdem ein Referenzwert (z.B. eine Referenzmenge) verbraucht worden ist.

Es ist möglich, dass das Betriebsverfahren oder zumindest einer der Schritte der Messung, der Zuordnung, der Aktivierung, der Bestimmung und der Ermittlung ausgesetzt wird, wenn sich das Fahrzeug in einer Stillstandsphase befindet und/oder ein Referenzwert keine Flüssigkeitsabnahme anzeigt. Es ist möglich, dass die Ergebnisse hiervon verworfen werden, wenn sie aus unterschiedlichen Stillstandsphasen stammen.

Außerdem kann das Betriebsverfahren oder zumindest einer der Schritte der Messung, der Zuordnung, der Aktivierung, der Bestimmung und der Ermittlung während derselben Stillstandsphase des Fahrzeugs durchgeführt werden oder während das Fahrzeug fährt.

Es ist möglich, dass der Zeitraum verlängert wird, wenn keine eindeutige maximale Frequention vorliegt, z.B. zumindest zwei gleichwertige, d.h. insbesondere gleiche oder zumindest nahezu gleiche oder ähnlich große, maximale Frequentionen vorliegen. Insbesondere liegt eine eindeutige Frequention vor, wenn die maximale Frequention um einen bestimmten Faktor größer ist als die nächst kleinere Frequention.

Der Zeitraum kann vorzugsweise dynamisch verlängert werden.

Der Zeitraum kann insbesondere in Abhängigkeit von einem Referenzwert verlängert werden.

Wie schon erwähnt, kann die Frequention die Häufigkeit einer Aktivierung und/oder einer Zuordnung umfassen. Alternativ oder ergänzend kann die Frequention die Dauer einer Aktivierung und/oder einer Zuordnung umfassen.

Die Flüssigkeit wird vorzugsweise zur Nachbehandlung von Abgasen des Fahrzeugs genutzt, insbesondere zur Schadstoffreduzierung. Die Flüssigkeit ist insbesondere ein Harnstoff-Wasser-Gemisch, eine Harnstoff-Wasser-Lösung, etc., also insbesondere ein Harnstoff enthaltendes Fluid.

Es ist möglich, dass in Abhängigkeit von einem oder mehreren realitätsnahen Füllwerten eine Flüssigkeitsabnahme (Ist-Abnahme) der Flüssigkeit in dem Behälter errechnet wird, die zweckmäßig einem Flüssigkeitsverbrauch entspricht. Die Flüssigkeitsabnahme entspricht insbesondere der Differenz zwischen zwei ermittelten realitätsnahen, vorzugsweise diskreten Füllwerten.

So kann z.B. ein erster, vorzugsweise diskreter Füllwert zu einem ersten Zeitpunkt und ein zweiter, vorzugsweise diskreter Füllwert zu einem zweiten Zeitpunkt ermittelt werden. Die Differenz zwischen erstem Füllwert und zweitem Füllwert entspricht zweckmäßig einer Flüssigkeitsabnahme insbesondere zwischen dem ersten Zeitpunkt und dem zweiten Zeitpunkt.

Insbesondere kann die Flüssigkeitsabnahme z.B. über eine zweckmäßig definierte Zeitspanne mit einer Referenzabnahme (Soll-Abnahme) plausibilisiert (z.B. verglichen) werden.

Somit kann vorteilhaft eine (tatsächliche bzw. realitätsnahe) Flüssigkeitsabnahme (Ist-Abnahme) mit einer Referenzabnahme (Soll-Abnahme) abgeglichen werden. Vorzugsweise kann in Abhängigkeit von der Abweichung bzw. allgemein einer Abweichung zwischen Flüssigkeitsabnahme und Referenzabnahme eine Betriebseinschränkung des Fahrzeugs aktiviert werden.

Bei einer Abweichung zwischen Ist-Abnahme und Soll-Abnahme kann z.B. davon ausgegangen werden, dass das System manipuliert worden ist, um einen geringeren Flüssigkeitsverbrauch zu erzielen. Um das zu verhindern, können Betriebseinschränkungen eingeleitet werden.

Die Referenzabnahme (Referenzverbrauch) ist z.B. so definiert, dass ein bestimmter Abbau von Schadstoffen im Abgas des Fahrzeugs erzielt wird.

Es ist möglich, dass eine Betriebseinschränkung des Fahrzeugs aktiviert wird, wenn der realitätsnahe Füllwert einen Referenzwert z.B. über eine zweckmäßig definierte Zeitspanne (vorzugsweise um eine vorbestimmte Größe) unterschreitet. Alternativ oder ergänzend kann eine Betriebseinschränkung des Fahrzeugs aktiviert werden, wenn die Flüssigkeitsabnahme die Referenzabnahme z.B. über eine zweckmäßig definierte Zeitspanne (vorzugsweise um eine vorbestimmte Größe) unterschreitet. Ebenso alternativ oder ergänzend kann eine Betriebseinschränkung des Fahrzeugs aktiviert werden, wenn aus einem oder mehreren realitätsnahen Füllwerten z.B. über eine zweckmäßig definierte Zeitspanne eine (vorzugsweise um eine vorbestimmte Größe) zu geringe Flüssigkeitsabnahme berechnet wird.

Der genannte Zeitraum und die genannte Zeitspanne können einander entsprechen oder voneinander differieren.

Vorzugsweise basiert der Referenzwert auf zweckmäßig aktuell gemessenen Abgaswerten oder Betriebsparametern (z.B. Geschwindigkeit, Kraftststoffverbrauch, etc.) des Fahrzeugs. Das Betriebsverfahren kann also den Schritt des Erfassens/Messens von Abgaswerten oder Betriebsparametern des Fahrzeugs umfassen.

Es ist möglich, dass in Abhängigkeit der erfassten Abgaswerte oder Betriebsparameter ein Referenzwert errechnet wird, der z.B. erforderlich ist, um einen bestimmten Abbau von Schadstoffen im Abgas des Fahrzeugs zu erzielen.

Der Referenzwert wird vorzugsweise von einem Steuergerät des Fahrzeugs errechnet und vorzugsweise laufend aktualisiert, z.B. während das Fahrzeug fährt oder allgemein der Fahrzeugmotor eingeschaltet ist.

Der Referenzwert ist vorzugsweise ein dynamischer dimensionierter und/oder veränderbarer Referenzwert, insbesondere deshalb, weil sich die Abgaswerte oder die Betriebsparameter des Fahrzeugs nahezu ständig ändern.

Es ist möglich, dass die Betriebseinschränkung in Abhängigkeit der Motorbetriebsdauer (z.B. Motorbetriebsstunden) aktiviert wird, während der der realitätsnahe Füllwert von einem Referenzwert abweicht, und/oder während der die errechnete Flüssigkeitsabnahme einen Referenzwert unterschreitet, und/oder
während der eine Flüssigkeitsabnahme zu gering ist, um einen bestimmten Abbau von Schadstoffen im Abgas des Fahrzeugs zu erzielen.

Der Referenzwert entspricht im Rahmen der Erfindung vorzugsweise einer Referenzmenge, insbesondere einer Referenzabnahme, bzw. umgekehrt. Der Referenzwert, vorzugsweise die Referenzmenge, insbesondere die Referenzabnahme, kann wie bereits erwähnt so definiert sein, dass ein bestimmter Abbau von Schadstoffen im Abgas des Fahrzeugs erzielt wird. Der Referenzwert kann im Rahmen der Erfindung aber auch andere Referenzcharakteristika umfassen.

Zu erwähnen ist, dass im Rahmen der Erfindung der Zeitraum vorzugsweise ein dynamisch dimensionierter (z.B. veränderbarer) Zeitraum ist und z.B. in Abhängigkeit des Referenzwerts dimensioniert werden kann.

Bei den erwähnten Referenzwerten kann es sich um ein und denselben Referenzwert handeln, nämlich zweckmäßig den, der angibt, wie viel Flüssigkeit für den Abbau der Schadstoffe im Abgas des Fahrzeugs notwendig ist.

Außerdem ist nochmals hervorzuheben, dass der realitätsnahe Füllwert insbesondere ein Füll-Ist-Wert ist und/oder die Flüssigkeitsabnahme insbesondere eine Flüssigkeits-Ist-Abnahme ist. Hingegen ist der Referenzwert insbesondere ein Referenz-Soll-Wert und/oder die Referenzabnahme eine Referenz-Soll-Abnahme.

Die Flüssigkeitsabnahme entspricht vorzugsweise einem Flüssigkeitsverbrauch, während die Referenzabnahme vorzugsweise einem Referenzverbrauch entspricht.

Obige erfindungsgemäßen Merkmale und Ausführungsformen sind beliebig miteinander kombinierbar. Andere vorteilhafte Weiterbildungen der Erfindung sind in den Unteransprüchen offenbart oder ergeben sich aus der nachstehenden Beschreibung bevorzugter Ausführungsbeispiele der Erfindung in Verbindung mit den beigefügten Figuren.
Figur 1 zeigt eine schematische Prinzipdarstellung der Ermittlung realitätsnaher Füllwerte einer Flüssigkeit in einem Behälter eines Fahrzeugs gemäß einem Ausführungsbeispiel der Erfindung, und
Figur 2 zeigt ein Flussdiagramm eines Betriebsverfahrens gemäß einem Ausführungsbeispiel der Erfindung.

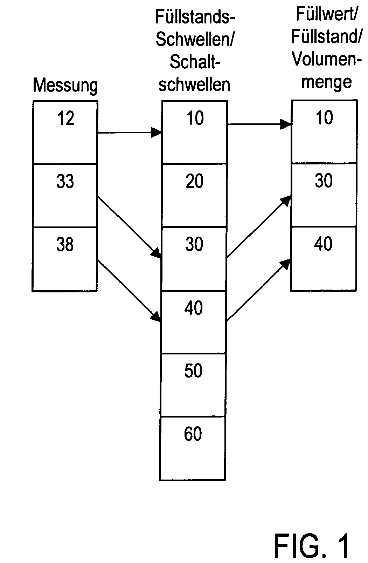

Figur 1 zeigt eine schematische Prinzipdarstellung der Ermittlung realitätsnaher Füllwerte einer Flüssigkeit in einem Behälter eines Fahrzeugs gemäß einem Ausführungsbeispiel der Erfindung. Die Flüssigkeit wird zur Nachbehandlung von Abgasen genutzt und ist insbesondere ein Harnstoff-Wasser-Gemisch.

Mittels eines Füllstandsgebers kann ein Füllstand der Flüssigkeit mit Hilfe eines Schwimmers gemessen werden, der in einer Röhre oder außerhalb einer Röhre (z.B. um eine Röhre) in im Wesentlichen vertikaler Richtung bewegbar ist. Innerhalb der Röhre können sich in gleichmäßigen Abständen diskrete Füllstandsschwellen z.B. in Form von Schaltschwellen befinden, die von dem Schwimmer aktivierbar sind, sobald der Schwimmer eine Füllstandsschwelle erreicht. Jede Füllstandsschwelle entspricht einem definierten Füllwert, insbesondere einer Füllstandshöhe und vorzugsweise durch die bekannte Geometrie des Behälters einer Volumenmenge. Aus Figur 1 wird ersichtlich, dass ein gemessener Füllstand (vergleiche linke Spalte in Figur 1) nicht direkt für die Ermittlung eines Füllwerts verwendet wird, sondern stattdessen einer nächstgelegenen Füllstandsschwelle aus einer Vielzahl bekannter Füllstandsschwellen zugeordnet wird.

Wird z.B. ein Füllstand "12" gemessen, wird dieser Füllstand der Füllstandsschwelle "10" zugeordnet. Ein gemessener Füllstand "33" wird z.B. einer Füllstandschwelle "30" zugeordnet, während ein Füllstand "38" z.B. einer Füllstandsschwelle "40" zugeordnet wird.

Außerdem wird die Frequention einer Aktivierung einer Füllstandsschwelle mittels des Schwimmers und vorzugsweise die Frequention einer Zuordnung eines gemessenen Füllstands zu einer nächstliegenden Füllstandsschwelle gezählt, wobei mit Frequention insbesondere Dauer und/oder Häufigkeit gemeint ist.

Anschließend kann die Füllstandsschwelle ermittelt werden, die relativ zu einem definierten Zeitraum eine maximale Frequention aufweist und somit einen realitätsnahen diskreten Füllwert (vergleiche rechte Spalte in Figur 1) repräsentiert, insbesondere für die Zeit, während die nächste Ermittlung durchgeführt wird.

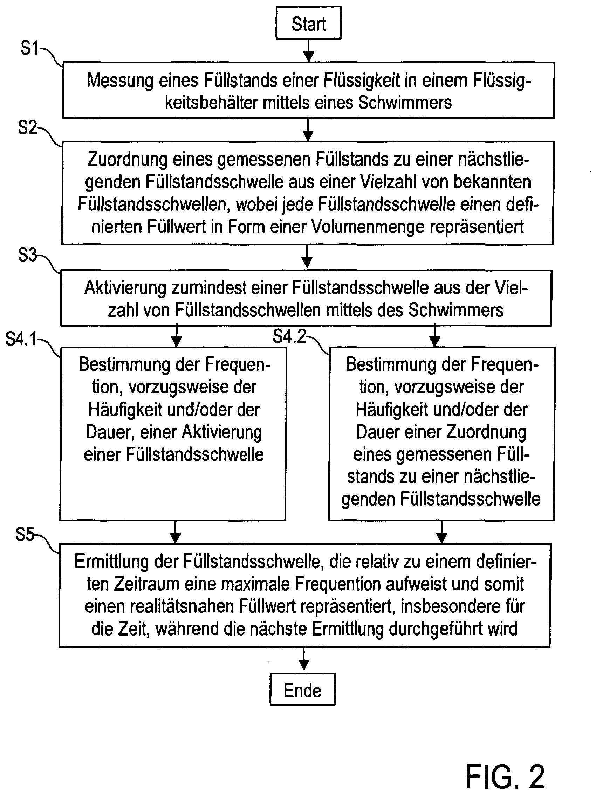

Figur 2 zeigt ein Flussdiagramm eines Betriebsverfahrens gemäß einer Ausführungsform der Erfindung, das in Verbindung mit dem unter Bezugnahme auf die Figur 1 erläuterten Prinzip durchführbar ist.

In einem Schritt S1 wird ein Füllstand einer Flüssigkeit in einem Behälter eines Fahrzeugs mittels eines Messmittels wie z.B. eines Schwimmers gemessen.

In einem Schritt S2 wird ein gemessener Füllstand einer nächstliegenden Füllstandsschwelle aus einer Vielzahl bekannter Füllstandsschwellen zugeordnet, wobei jede Füllstandsschwelle einen definierten Füllwert repräsentiert, z.B. in Form eines Füllstands oder einer Volumenmenge. Die Füllstandsschwelle ist als Schaltschwelle ausgeführt.

In einem Schritt S3 wird eine Füllstandsschwelle aus der Vielzahl von Füllstandsschwellen mittels des Schwimmers aktiviert.

In einem Schritt S4.1 wird die Frequention einer Aktivierung einer Füllstandsschwelle bestimmt. Vorzugsweise ergänzend wird in einem Schritt S4.2 die Frequention einer Zuordnung eines gemessenen Füllstands zu einer nächstliegenden Füllstandsschwelle bestimmt.

In einem Schritt S5 wird die Füllstandsschwelle ermittelt, die relativ zu einem definierten Zeitraum, z.B. während oder nach einem definierten Zeitraum, eine maximale Frequention aufweist und somit einen realitätsnahen diskreten Füllwert repräsentiert und zwar insbesondere für die Zeit, während der die nächste Ermittlung durchgeführt wird.

Der Zeitraum ist vorzugsweise ein dynamisch dimensionierter und somit insbesondere veränderbarer Zeitraum.

Nachfolgend wird die Dimensionierung des Zeitraums, insbesondere die zeitliche Begrenzung für die Bestimmung der Frequention beschrieben. Je mehr von der Flüssigkeit verbraucht wird, um so schneller ändert sich der reale Füllstand der Flüssigkeit in dem Behälter. Aus diesem Grund wird ein Referenzwert in Form einer theoretisch verbrauchten Menge dieser Flüssigkeit herangezogen, um die Dauer des Zeitraums für die Bestimmung der Frequention festzulegen. Eine laufende Frequentionsbestimmung wird insbesondere dann ausgewertet, sobald ein Referenzwert, der erforderlich ist, um einen bestimmten Abbau von Schadstoffen im Abgas des Fahrzeugs zu erzielen, verbraucht worden ist. Die Frequentionsbestimmung kann ausgesetzt werden, falls sich das Fahrzeug im Stillstand befindet und ergänzend oder alternativ keine Flüssigkeit verbraucht wird.

Diese Maßnahme ist vorteilhaft, da z.B. bei einem in Schräglage abgestellten Fahrzeug ein falscher Füllstand gemessen wird. Die Frequention der entsprechend falsch gemessenen Füllstandsschwelle darf nicht zu stark gewichtet werden.

Kann nach Ablauf des Zeitraums keine eindeutige maximale Frequention einer einzelnen Füllstandsschwelle und somit kein eindeutiger realitätsnaher Füllwert ermittelt werden, so kann der Zeitraum, um die Zeit, in der eine weitere Menge an Flüssigkeit verbraucht wird, verlängert werden. Eine eindeutige maximale Frequention ist insbesondere erst dann gegebenen, wenn die größte Frequention um einen definierten Faktor größer ist als die nächst kleinere Frequention.

Die Bestimmung der Frequention und die Ermittlung der Füllstandsschwelle, die relativ zu einem definierten Zeitraum eine maximale Frequention aufweist, wird ausgewertet, nachdem der Referenzwert, der vorzugsweise mit einer Referenzmenge einhergeht, verbraucht worden ist.

Das Betriebsverfahren wird insbesondere während derselben Stillstandsphase des Fahrzeugs durchgeführt oder während das Fahrzeug fährt. Hingegen werden das Betriebsverfahren oder zumindest ein oder mehrere Schritte davon ausgesetzt, wenn sich das Fahrzeug z.B. in einer Stillstandsphase befindet und der Referenzwert nicht abnimmt, also insbesondere keine Flüssigkeitsabnahme widerspiegelt.

Es ist ersichtlich, dass der Referenzwert einem theoretisch ermittelten Referenzverbrauch der Flüssigkeit entspricht, der von einem Steuergerät des Fahrzeugs berechnet wird.

Das in Figur 2 gezeigte Betriebsverfahren kann durch eine Vielzahl weiterer Schritte gemäß bevorzugten Ausführungsformen der Erfindung ergänzt werden.

So kann der Zeitraum in Abhängigkeit eines Referenzwerts, der erforderlich ist, um einen bestimmten Abbau von Schadstoffen im Abgas des Fahrzeugs zu erzielen, verlängert werden.

Außerdem kann in Abhängigkeit von einem oder mehreren ermittelten realitätsnahen Füllwerten eine entsprechender Flüssigkeitsabnahme berechnet werden, die über eine definierte Zeitspanne mit einer Referenzabnahme verglichen wird.

Ferner kann eine Betriebseinschränkung des Fahrzeugs aktiviert werden, wenn der realitätsnahe Füllwert (Ist-Wert) einen Referenzwert (Soll-Wert) über eine definierte Zeitspanne unterschreitet, oder wenn die realitätsnahe Flüssigkeitsabnahme (Ist-Abnahme) eine Referenzabnahme (Soll-Abnahme) über eine definierten Zeitspanne unterschreitet, oder wenn aus einem oder mehreren realitätsnahen Füllwerten (Ist-Wert) eine Flüssigkeitsabnahme berechnet wird, die zu gering ist, um eine bestimmte Reduktion von Schadstoffen im Abgas des Fahrzeugs zu erzielen.

Der Referenzwert basiert auf erfassten, sich ändernden Abgaswerten und Betriebsparametern des Fahrzeugs und entspricht somit einem dynamisch dimensionierten Referenzwert, der von einem Steuergerät des Fahrzeugs errechnet und laufend aktualisierbar ist.

Die Erfindung ist nicht auf die vorstehend beschriebenen bevorzugten Ausführungsbeispiele beschränkt. Vielmehr ist eine Vielzahl von Varianten und Abwandlungen möglich.

## Patentansprüche

1. Betriebsverfahren für ein Fahrzeug, insbesondere zur Ermittlung realitätsnaher Füllwerte einer Flüssigkeit in einem Behälter eines Fahrzeugs, umfassend die Schritte:
- Messung (S1) eines Füllstands einer Flüssigkeit in einem Behälter des Fahrzeugs mittels eines Messmittels,
- Aktivierung (S3) einer Füllstandsschwelle aus einer Vielzahl von Füllstandsschwellen mittels des Messmittels,
**gekennzeichnet durch** die Schritte:
- Bestimmung (S4.1) der Frequention einer Aktivierung einer Füllstandsschwelle, und
- Ermittlung (S5) der Füllstandsschwelle, die relativ zu einem definierten Zeitraum eine maximale Frequention aufweist und somit einen realitätsnahen Füllwert repräsentiert, insbesondere für die Zeit, während die nächste Ermittlung (S5) durchgeführt wird.

2. Betriebsverfahren nach Anspruch 1, wobei der Zeitraum ein dynamisch dimensionierter Zeitraum ist, insbesondere einem Zeitraum entspricht, in dem eine vorgegebene Flüssigkeitsmenge verbraucht worden ist und für die Flüssigkeitsverbrauchsermittlung ein Referenzwert herangezogen wird, der so definiert ist, dass eine bestimmte Reduktion von Schadstoffen im Abgas des Fahrzeugs erzielt wird.

3. Betriebsverfahren nach Anspruch 1 oder 2, wobei der Zeitraum in Abhängigkeit von einem Referenzwert dimensioniert wird.

4. Betriebsverfahren nach einem der vorhergehenden Ansprüche, wobei die Bestimmung (S4.1; S4.2) und/oder die Ermittlung (S5) ausgeführt wird, nachdem ein Referenzwert verbraucht worden ist.

5. Betriebsverfahren nach einem der vorhergehenden Ansprüche, wobei die Messung (S1), die Aktivierung (S3), die Bestimmung (S4.1) und/oder die Ermittlung (S5) ausgesetzt wird, wenn sich das Fahrzeug in einer Stillstandsphase befindet und/oder ein Referenzwert keine Flüssigkeitsabnahme anzeigt.

6. Betriebsverfahren nach einem der vorhergehenden Ansprüche, wobei die Messung (S1), die Aktivierung (S3), die Bestimmung (S4.1) und/oder die Ermittlung (S5) während derselben Stillstandsphase des Fahrzeugs durchgeführt wird oder während das Fahrzeug fährt.

7. Betriebsverfahren nach einem der vorhergehenden Ansprüche, wobei der Zeitraum verlängert wird, wenn keine eindeutige maximale Frequention vorliegt, z.B. zumindest zwei gleichwertige maximale Frequentionen vorliegen.

8. Betriebsverfahren nach einem der vorhergehenden Ansprüche, wobei der Zeitraum dynamisch verlängert wird.

9. Betriebsverfahren nach einem der vorhergehenden Ansprüche, wobei der Zeitraum in Abhängigkeit von einem Referenzwert verlängert wird.

10. Betriebsverfahren nach einem der vorhergehenden Ansprüche, wobei die Frequention die Häufigkeit einer Aktivierung umfasst.

11. Betriebsverfahren nach einem der vorhergehenden Ansprüche, wobei die Frequention die Dauer einer Aktivierung umfasst.

12. Betriebsverfahren nach einem der vorhergehenden Ansprüche, wobei die Flüssigkeit zur Nachbehandlung von Abgasen genutzt wird und insbesondere ein Harnstoff-Wasser-Gemisch ist.

13. Betriebsverfahren nach einem der vorhergehenden Ansprüche, wobei in Abhängigkeit von einem oder mehreren realitätsnahen Füllwerten eine Flüssigkeitsabnahme errechnet wird.

14. Betriebsverfahren nach einem der vorhergehenden Ansprüche, wobei ein erster realitätsnaher, vorzugsweise diskreter, Füllwert zu einem ersten Zeitpunkt und ein zweiter realitätsnaher, vorzugsweise diskreter, Füllwert zu einem zweiten Zeitpunkt ermittelt wird, wobei die Differenz zwischen erstem Füllwert und zweitem Füllwert einer Flüssigkeitsabnahme in dem Behälter entspricht.

15. Betriebsverfahren nach Anspruch 13 oder 14, wobei die errechnete Flüssigkeitsabnahme mit einem Referenzwert verglichen wird und eine Betriebseinschränkung des Fahrzeugs aktiviert wird, wenn die errechnete Flüssigkeitsabnahme und der Referenzwert differieren, insbesondere um ein vorbestimmtes Maß.

16. Betriebsverfahren nach einem der vorhergehenden Ansprüche, wobei eine Betriebseinschränkung des Fahrzeugs aktiviert wird,
- wenn der realitätsnahe Füllwert von einem Referenzwert über eine definierte Zeitspanne abweicht,
- wenn die errechnete Flüssigkeitsabnahme einen Referenzwert über eine definierte Zeitspanne unterschreitet, und/oder
- wenn aus einem oder mehreren realitätsnahen Füllwerten eine Flüssigkeitsabnahme errechnet wird, die zu gering ist, um einen bestimmten Abbau von Schadstoffen im Abgas des Fahrzeugs zu erzielen.

17. Betriebsverfahren nach Anspruch 15 oder 16, wobei die Betriebseinschränkung in Abhängigkeit von der Motorbetriebsdauer aktiviert wird,
- während der der realitätsnahe Füllwert von einem Referenzwert abweicht, vorzugsweise um eine vorbestimmte Größe,
- während der die errechnete Flüssigkeitsabnahme einen Referenzwert unterschreitet, vorzugsweise um eine vorbestimmte Größe,
und/oder
- während der eine Flüssigkeitsabnahme zu gering ist, um einen bestimmten Abbau von Schadstoffen im Abgas des Fahrzeugs zu erzielen.

18. Betriebsverfahren nach einem der Ansprüche 2 bis 17, wobei
- der Referenzwert ein dynamisch dimensionierter Referenzwert ist und/oder auf erfassten Abgaswerten oder Betriebsparametern des Fahrzeugs basiert, und
- von einem Steuergerät des Fahrzeugs errechnet wird.

19. Betriebsverfahren nach einem der Ansprüche 2 bis 18, wobei der Referenzwert einer Referenzmenge, insbesondere einer Referenzabnahme, entspricht, die erforderlich ist, um einen bestimmten Abbau von Schadstoffen im Abgas des Fahrzeugs zu erzielen.

20. Betriebsverfahren nach einem der vorhergehenden Ansprüche, wobei die Schaltschwellen diskret sind und/oder der realitätsnahe Füllwert diskret ist.

## Claims

1. Operating method for a vehicle, in particular for determining realistic filling values of a liquid in a vehicle container, comprising the following steps:
- measurement (S1) of a filling level of a liquid in a vehicle container by means of a measuring means,
- activation (S3) of a filling level threshold from a multiplicity of filling level thresholds by means of the measuring means,
**characterized by** the following steps:
- analysis (S4.1) of the frequention of an activation of a filling level threshold, and
- determination (S5) of the filling level threshold which has a maximum frequention relative to a defined period of time and therefore represents a realistic filling value, in particular for the time during which the next determination (S5) is carried out.

2. Operating method according to Claim 1, wherein the period of time is a dynamically dimensioned period of time, in particular corresponds to a period of time in which a predetermined quantity of liquid has been consumed, and a reference value is used for the determination of the liquid consumption, said reference value being defined in such a manner that a certain reduction of pollutants in the exhaust gas of the vehicle is obtained.

3. Operating method according to Claim 1 or 2, wherein the period of time is dimensioned as a function of a reference value.

4. Operating method according to one of the preceding claims, wherein the analysis (S4.1; S4.2) and/or the determination (S5) are/is carried out after a reference value has been used.

5. Operating method according to one of the preceding claims, wherein the measurement (S1), the activation (S3), the analysis (S4.1) and/or the determination (S5) are/is interrupted when the vehicle is in a standstill phase and/or a reference value does not indicate any removal of liquid.

6. Operating method according to one of the preceding claims, wherein the measurement (S1), the activation (S3), the analysis (S4.1) and/or the determination (S5) are/is carried out during the same standstill phase of the vehicle or while the vehicle is moving.

7. Operating method according to one of the preceding claims, wherein the period of time is extended if there is no unambiguous maximum frequention, for example if there are at least two maximum frequentions of equal value.

8. Operating method according to one of the preceding claims, wherein the period of time is extended dynamically.

9. Operating method according to one of the preceding claims, wherein the period of time is extended as a function of a reference value.

10. Operating method according to one of the preceding claims, wherein the frequention comprises the frequency of an activation.

11. Operating method according to one of the preceding claims, wherein the frequention comprises the duration of an activation.

12. Operating method according to one of the preceding claims, wherein the liquid is used for the aftertreatment of exhaust gases and in particular is a urea-water mixture.

13. Operating method according to one of the preceding claims, wherein a removal of liquid is calculated as a function of one or more realistic filling values.

14. Operating method according to one of the preceding claims, wherein a first realistic, preferably discrete, filling value is determined at a first instant and a second realistic, preferably discrete, filling value is determined at a second instant, wherein the difference between the first filling value and second filling value corresponds to a removal of liquid in the container.

15. Operating method according to Claim 13 or 14, wherein the calculated removal of liquid is compared with a reference value and an operating limitation of the vehicle is activated if the calculated removal of liquid and the reference value differ, in particular by a predetermined extent.

16. Operating method according to one of the preceding claims, wherein an operating limitation of the vehicle is activated
- if the realistic filling value differs from a reference value over a defined time interval,
- if the calculated removal of liquid falls below a reference value over a defined time interval, and/or
- if a removal of liquid is calculated from one or more realistic filling values, the removal of liquid being too small in order to obtain a certain reduction of pollutants in the exhaust gas of the vehicle.

17. Operating method according to Claim 15 or 16, wherein the operating limitation is activated as a function of the engine operating period
- during which the realistic filling value differs from a reference value, preferably by a predetermined magnitude,
- during which the calculated removal of liquid falls below a reference value, preferably by a predetermined magnitude,
and/or
- during which a removal of liquid is too small in order to obtain a certain reduction of pollutants in the exhaust gas of the vehicle.

18. Operating method according to one of Claims 2 to 17, wherein
- the reference value is a dynamically dimensioned reference value and/or is based on detected exhaust gas values or operating parameters of the vehicle, and
- is calculated by a control device of the vehicle.

19. Operating method according to one of Claims 2 to 18, wherein the reference value corresponds to a reference quantity, in particular a reference removal, which is required in order to obtain a certain reduction of pollutants in the exhaust gas of the vehicle.

20. Operating method according to one of the preceding claims, wherein the switching thresholds are discrete and/or the realistic filling value is discrete.

## Revendications

1. Procédé de fonctionnement pour un véhicule, notamment destiné à déterminer des valeurs de remplissage réalistes d'un réservoir d'un véhicule par un liquide, comprenant les étapes suivantes :
- mesure (S1) d'un niveau d'un liquide dans un réservoir du véhicule par le biais d'un moyen de mesure,
- activation (S3) d'un seuil de niveau de remplissage parmi une pluralité de seuils de niveau de remplissage par le biais du moyen de mesure,
**caractérisé par** les étapes suivantes :
- détermination (S4.1) de la fréquence d'une activation d'un seuil de niveau de remplissage, et
- identification (S5) du seuil de niveau de remplissage qui présente une fréquence maximale par rapport à une période définie et représente ainsi une valeur de remplissage réaliste, notamment pour la durée pendant laquelle est effectuée l'identification (S5) suivante.

2. Procédé de fonctionnement selon la revendication 1, la période étant une période dimensionnée dynamiquement, qui correspond notamment à une période dans laquelle une quantité de liquide prédéfinie a été consommée et une valeur de référence est utilisée pour l'identification de la consommation de liquide, ladite valeur de référence étant définie de telle sorte qu'une réduction déterminée des substances polluantes dans les gaz d'échappement du véhicule est obtenue.

3. Procédé de fonctionnement selon la revendication 1 ou 2, la période étant dimensionnée en fonction d'une valeur de référence.

4. Procédé de fonctionnement selon l'une des revendications précédentes, la détermination (S4.1 ; S4.2) et/ou l'identification (S5) étant effectuées après qu'une valeur de référence ait été consommée.

5. Procédé de fonctionnement selon l'une des revendications précédentes, la mesure (S1), l'activation (S3), la détermination (S4.1) et/ou l'identification (S5) étant suspendues lorsque le véhicule se trouve dans une phase d'arrêt et/ou qu'une valeur de référence n'indique pas une diminution du liquide.

6. Procédé de fonctionnement selon l'une des revendications précédentes, la mesure (S1), l'activation (S3), la détermination (S4.1) et/ou l'identification (S5) étant effectuées pendant la même phase d'arrêt du véhicule ou pendant que le véhicule se déplace.

7. Procédé de fonctionnement selon l'une des revendications précédentes, la période étant prolongée lorsqu'il n'existe pas de fréquence maximale univoque, par exemple lorsqu'il existe au moins deux fréquences maximales équivalentes.

8. Procédé de fonctionnement selon l'une des revendications précédentes, la période étant prolongée dynamiquement.

9. Procédé de fonctionnement selon l'une des revendications précédentes, la période étant prolongée en fonction d'une valeur de référence.

10. Procédé de fonctionnement selon l'une des revendications précédentes, la fréquence comprenant la périodicité d'une activation.

11. Procédé de fonctionnement selon l'une des revendications précédentes, la fréquence comprenant la durée d'une activation.

12. Procédé de fonctionnement selon l'une des revendications précédentes, le liquide étant utilisé pour le post-traitement des gaz d'échappement et étant notamment un mélange d'urée et d'eau.

13. Procédé de fonctionnement selon l'une des revendications précédentes, une diminution du liquide étant calculée en fonction d'une ou de plusieurs valeurs de remplissage réalistes.

14. Procédé de fonctionnement selon l'une des revendications précédentes, une première valeur de remplissage réaliste, de préférence discrète, étant identifiée à un premier instant et une deuxième valeur de remplissage réaliste, de préférence discrète, à un deuxième instant, la différence entre la première valeur de remplissage et la deuxième valeur de remplissage correspondant à une diminution du liquide dans le réservoir.

15. Procédé de fonctionnement selon la revendication 13 ou 14, la diminution de liquide calculée étant comparée à une valeur de référence et une restriction de fonctionnement du véhicule étant activée lorsque la diminution de liquide calculée et la valeur de référence sont différentes, notamment d'une mesure prédéterminée.

16. Procédé de fonctionnement selon l'une des revendications précédentes, une restriction de fonctionnement du véhicule étant activée,
- lorsque la valeur de remplissage réaliste s'écarte d'une valeur de référence pendant une période définie,
- lorsque la diminution de liquide calculée devient inférieure à une valeur de référence sur une période définie, et/ou
- lorsqu'une diminution de liquide calculée à partir d'une ou de plusieurs valeurs de remplissage réalistes est trop faible pour obtenir une réduction déterminée des substances polluantes dans les gaz d'échappement du véhicule.

17. Procédé de fonctionnement selon la revendication 15 ou 16, la restriction de fonctionnement du véhicule étant activée en fonction de la durée de fonctionnement du moteur,
- pendant laquelle la valeur de remplissage réaliste s'écarte d'une valeur de référence, de préférence par une grandeur prédéterminée,
- pendant laquelle la diminution de liquide calculée devient inférieure à une valeur de référence, de préférence par une grandeur prédéterminée,
et/ou
- pendant laquelle une diminution de liquide est trop faible pour obtenir une réduction déterminée des substances polluantes dans les gaz d'échappement du véhicule.

18. Procédé de fonctionnement selon l'une des revendications 2 à 17,
- la valeur de référence étant une valeur de référence dimensionnée dynamiquement et/ou se basant sur des valeurs de gaz d'échappement ou des paramètres de fonctionnement acquis du véhicule, et
- étant calculée par un contrôleur du véhicule.

19. Procédé de fonctionnement selon l'une des revendications 2 à 18, la valeur de référence correspondant à une quantité de référence, notamment à une diminution de référence, qui est nécessaire pour obtenir une réduction déterminée des substances polluantes dans les gaz d'échappement du véhicule.

20. Procédé de fonctionnement selon l'une des revendications précédentes, les seuils de commutation étant discrets et/ou la valeur de remplissage réaliste étant discrète.
